# EUROPEAN PATENT APPLICATION

(11) **EP 4 767 807 A1**
(43) Date of publication of application: **01.07.2026**
(21) Application number: 25221599.1
(22) Date of filing: 08.12.2025
(51) Int. Cl.: A01D 34/63, A01D 34/71, A01D 67/00

(54) **MOWER UNIT**

(30) Priority: 25.12.2024 JP 2024229048
(71) Applicant: Kubota Corporation, Osaka-shi, Osaka 530-0011 (JP)
(72) Inventor: KOYAMA, Yoichiro, SAKAI-SHI, OSAKA, 5900908 (JP); TAMAKI, Satoru, SAKAI-SHI, OSAKA, 5900908 (JP); YAMADA, Shunya, SAKAI-SHI, OSAKA, 5900908 (JP); TOGOSHI, Yoshikazu, SAKAI-SHI, OSAKA, 5900908 (JP)
(74) Representative: Cabinet Beau de Loménie

(57) **Abstract**

A mower unit (1) includes: a mower deck (2) having an internal space (IS) and including: a top plate (21); and a front side wall (22f) and a rear side wall (22b) each extending downward from an edge of the top plate (21); a plurality of blades (30) arranged laterally in the internal space (IS) and each rotatable about a vertical axis to cut grass and generate a conveyance wind; a cut grass discharge opening (10) disposed at a lateral end of the internal space (IS); an inclined face (5) at a corner defined by the cut grass discharge opening (10), the top plate (21), and the front side wall (22f), the inclined face (5) being connected to the top plate (21) and the front side wall (22f), extending laterally from the cut grass discharge opening (10), and being narrower as farther away from the cut grass discharge opening (10).

## Description

### Technical Field

The present invention relates to a mower unit including a mower deck with an internal space and two or more blades disposed in the internal space for cutting grass, the mower deck having a cut grass discharge opening at an end of the internal space, the mower unit being configured to discharge the cut grass from the cut grass discharge opening.

### Background Art

Patent Literature 1 discloses a side discharge mower including a mower deck and two or more blades. The mower deck includes a top plate and a front wall extending downward from the top plate, the top plate and the front wall defining an internal space. The blades are arranged next to each other in the internal space and each rotatable about a vertical axis to cut grass. The side discharge mower further includes a baffle plate for forming a cut grass discharge path together with the front wall. The side discharge mower is configured to discharge the cut grass through the cut grass discharge path from a discharge opening.

Patent Literature 2 discloses a side discharge mower including a mower deck and two or more blades. The mower deck includes a top plate and a front wall defining an internal space. The blades are arranged next to each other in the internal space and each rotatable about a vertical axis to cut grass. The side discharge mower further includes a baffle plate oriented along the inner face of the front wall for forming a cut grass discharge path between the area of the rotation of each blade and itself. The side discharge mower is configured to discharge the cut grass through the cut grass discharge path from a discharge opening.

### Citation List

### Patent Literature

Patent Literature 1: U.S. Patent No. No. 7360352
Patent Literature 2: U.S. Patent No. No. 8156722

### Summary of Invention

### Technical Problem

The respective mower units of Patent Literatures 1 and 2 are each configured such that the blades rotate to cut grass and generate a conveyance wind that discharges the cut grass from the cut grass discharge opening while the cut grass is concentrated on the front wall. For instance, the mower unit of Patent Literature 1 discharges, from the cut grass discharge opening, cut grass sticking to the front wall, while the mower unit of Patent Literature 2 discharges, from the cut grass discharge opening, cut grass sticking to the baffle plate. Such a mower unit configured in either manner, if having no curved surface between the top plate and the front wall, discharges cut grass in the form of a quite narrow cut grass beam (that is, a flow of a cut grass bundle). The mower unit thus tends to suffer from poor discharge performance.

In view of the above circumstances, the present invention has an object of providing a mower unit configured to discharge cut grass from a cut grass discharge opening while diffusing the cut grass forward and rearward.

### Solution to Problem

A mower unit according to the present invention includes: a mower deck having an internal space and including: a top plate; and a front side wall and a rear side wall each extending downward from an edge of the top plate; a plurality of blades arranged laterally in the internal space and each rotatable about a vertical axis to cut grass and generate a conveyance wind; a cut grass discharge opening disposed at a lateral end of the internal space for discharging the cut grass with use of the conveyance wind; and an inclined face at a corner defined by the cut grass discharge opening, the top plate, and the front side wall, the inclined face being connected to the top plate and the front side wall, extending laterally from the cut grass discharge opening, and being narrower as farther away from the cut grass discharge opening.

While cut grass is conveyed by the conveyance wind in such a state as to stick to the front side wall, the above configuration allows the cut grass to collide with the inclined face to be diffused before being discharged from the cut grass discharge opening. The mower deck has in its internal space an ascending current that causes the cut grass to be in the form of a cut grass beam proximate to the line of the connection between the respective inner faces of the top plate and the front side wall. This means that the inclined face is effective when disposed near the cut grass discharge opening and in an area defined by the top plate and the front side wall. Such an inclined face might reduce the area of the cross section of a cut grass conveying flow and increase the resistance of flow of cut grass. The inclined face, which is narrower as farther away from the cut grass discharge opening, reduces the flow resistance. The inclined face is, in other words, so shaped and oriented as to further diffuse cut grass forward, rearward, and heightwise and minimize the resistance of flow of the cut grass.

The inclined face may be in the shape of a triangle or a trapezoid (with an apex truncated from a triangle) for easy production to be connected to the top plate and the front side wall and extend laterally from the cut grass discharge opening. The word "triangle" as used herein may cover a trapezoid. The mower unit may thus be further configured such that the inclined face is triangular.

The top plate and the front side wall may be formed by bending. If the top plate and the front side wall are formed by bending, it should conveniently be followed by forming an inclined face by bending as well. The mower unit may thus be further configured such that the inclined face is of a curved inclined section extending from the top plate or the front side wall.

The top plate and the front side wall may alternatively be formed by welding. If the top plate and the front side wall are formed by welding, a member with the inclined face should conveniently be placed between the top plate and the front side wall for welding. The mower unit may thus be further configured such that the inclined face is of a plate coupled to the top plate and the front side wall.

The mower unit may include an attachable and detachable member with the inclined face for the inclined face to be maintained or detached easily. The mower unit may thus further include: an inclined member including: a first flange coupled to the top plate; a second flange coupled to the front side wall; and a central portion connecting the first flange to the second flange, wherein the inclined face is of the central portion.

To efficiently generate a conveyance wind that carries cut grass smoothly along the front side wall, the mower unit may further include: a baffle plate including: a rear baffle plate section shaped along a rear area of rotation of each of the plurality of blades; and a front baffle plate section disposed between the vertical axis of each of the plurality of blades and the front side wall, and wherein the front baffle plate section and the front side wall define therebetween a cut grass conveying path connected to the cut grass discharge opening.

### Brief Description of Drawings

Fig. 1 is a perspective view of a mower unit in its entirety.
Fig. 2 is a right side view of a mower unit.
Fig. 3 is a perspective bottom view of a mower unit.
Fig. 4 is a diagram illustrating an improvement of a mower unit.
Fig. 5 is a partial perspective view of a mower unit with a second example of an inclined face.
Fig. 6 is a perspective view of an inclined member with a third example of an inclined face.
Fig. 7 is a partial perspective view of a mower unit with a third example of an inclined face.

### Description of Embodiments

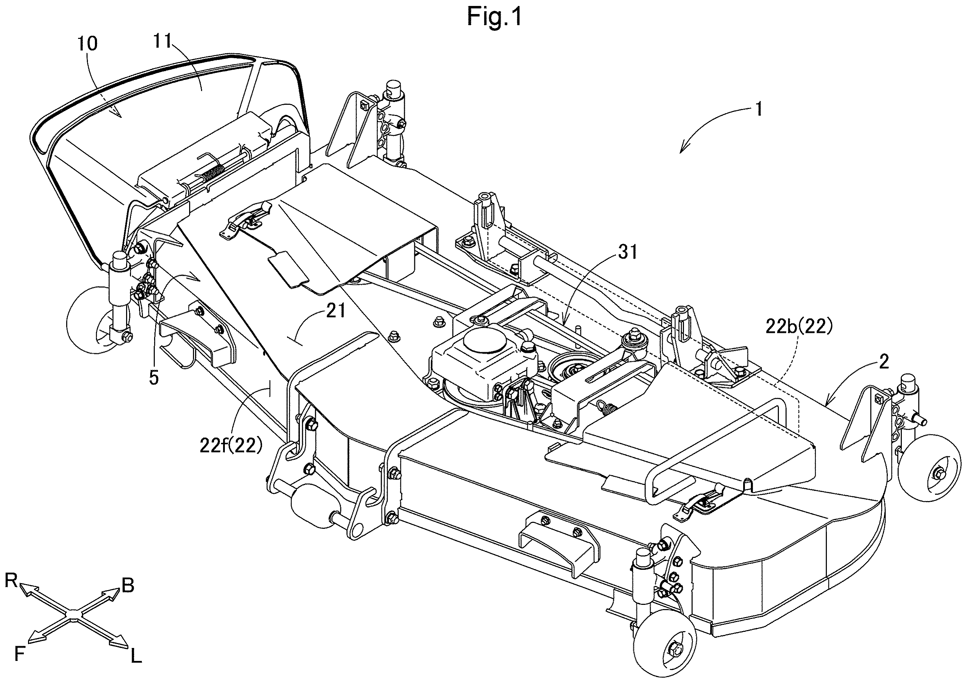

Unless otherwise stated, the present specification uses (i) terms such as "front" to refer to the direction indicated as "F" in Fig. 1 along the front-rear axis (that is, work travel directions), (ii) terms such as "rear" to refer to the direction indicated as "B" in Fig. 1 along the front-rear axis, (iii) terms such as "left" to refer to the direction indicated as "L" in Fig. 1 along the lateral axis (that is, along the width of the mower unit), which is orthogonal to the front-rear axis, (iv) terms such as "right" to refer to the direction indicated as "R" in Fig. 1 along the lateral axis, and (iv) terms such as "upward" and "downward" to refer to the directions along the vertical axis (that is, the height from the ground) of the mower unit.

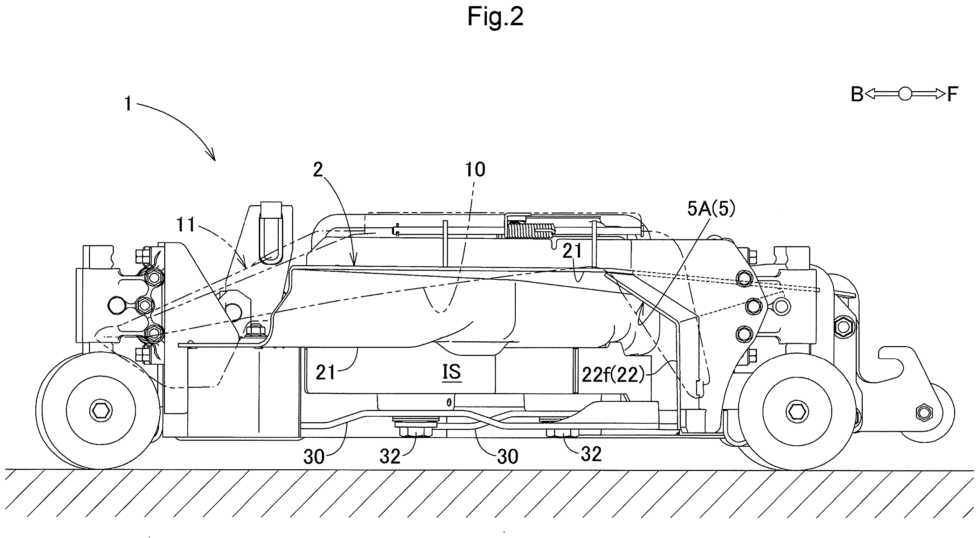

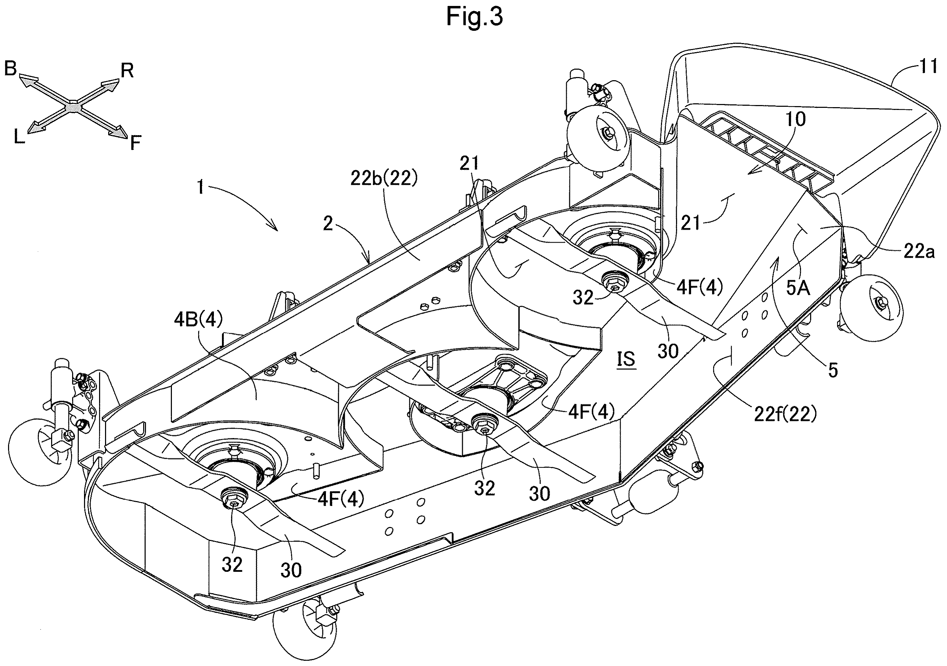

The description below deals with a mower unit 1 as a first embodiment of the present invention with reference to drawings. Fig. 1 is a perspective view of a mower unit 1 in its entirety. Fig. 2 is a right side view of the mower unit 1. Fig. 3 is a perspective bottom view of the mower unit 1.

The mower unit 1 includes a mower deck 2 configured to be held by the body of a tractor or mower with use of a link mechanism or the like. The mower deck 2 is capable of being lowered to a lower position, in which the mower deck 2 is in contact with the ground surface, and lifted to an upper position, in which the mower deck 2 is separated from the ground surface by a predetermined distance. The mower unit 1 lifts and lowers the mower deck 2 through two different schemes. One is a suspension scheme, in which the mower unit 1 adjusts the movement of the link mechanism. The other is a ground contact scheme, in which the mower unit 1 includes a gauge wheel attached to the mower deck 2 and configured to come into contact with the ground. Either scheme allows the mower deck 2 to be positioned in height relative to the ground (in which case the gap between the mower deck 2 and the ground surface corresponds to the mowing height). The user is able to adjust the height position by adjusting the vertical position of the gauge wheel relative to the mower deck 2.

The mower deck 2 includes a top plate 21 larger widthwise than lengthwise and side walls 22 extending downward from the edge of the top plate 21. The side walls 22 includes a front side wall 22f and a rear side wall 22b.

As illustrated in Figs. 2 and 3, while the mower deck 2 has an internal space IS, the mower unit 1 includes three blades 30 arranged laterally in the internal space IS. The mower unit 1 includes three blade shafts 32 extending vertically and each held by the mower deck 2 in such a manner as to be rotatable about a vertical axis. The blades 30 are each fixed to the lower end of one of the blade shafts 32. The mower unit 1 includes a blade drive mechanism 31 provided for the top plate 21 and including a belt to rotate the blade shafts 32. The blade drive mechanism 31 receives motive power from the vehicle to which the mower unit 1 is attached (not illustrated in the drawings).

As illustrated in Fig. 3, the mower deck 2 has at the right end a cut grass discharge opening 10 at which the internal space IS is open. The mower unit 1 includes a baffle plate 4 having an upper end connected to the top plate 21 (specifically, its inner face) and extending downward. The baffle plate 4 includes a rear baffle plate section 4B and a front baffle section 4F. The rear baffle plate section 4B is curved along a rear area of rotation of each blade 30 and has a lower end close to the ground surface to prevent cut grass from being released rearward. The front baffle section 4F has an upper end connected to the top plate 21 (specifically, its inner face) and extending downward. The front baffle section 4F is, as embodied in Fig. 3, divided into three parts that form a cut grass conveying path together with the respective inner faces of the top plate 21 and the front side wall 22f. The cut grass conveying path serves to convey grass cut by the blades 30 to the cut grass discharge opening 10. The front baffle section 4F is shorter than the rear baffle plate section 4B. The above configuration lets a major portion of grass cut by the blades 30 enter the cut grass conveying path through an area in which the front baffle section 4F is absent. The blades 30 rotate to cut grass and generate a conveyance wind that carries the cut grass along the cut grass conveying path and that discharges the cut grass from the cut grass discharge opening 10.

The mower unit 1 includes a discharge cover 11 attached to the top plate 21 and covering the cut grass discharge opening 10. The discharge cover 11 prevents cut grass discharged from the cut grass discharge opening 10 from scattering.

As illustrated in Fig. 3, the mower deck 2 has an inclined face 5 at a corner defined by the cut grass discharge opening 10, the top plate 21, and the front side wall 22f. The inclined face 5 is inclined relative to the respective inner faces of the top plate 21 and the front side wall 22f. The inclined face 5 is connected to the top plate 21 and the front side wall 22f, and extends laterally from the cut grass discharge opening 10 substantially to the position at which the top plate 21 is connected to the front side wall 22f. The inclined face 5 is, in other words, narrower as farther away from the cut grass discharge opening 10. The inclined face 5 extends laterally from the cut grass discharge opening 10 in the shape of a triangle (that is, a triangular wedge) to a position substantially corresponding to the blade shaft 32 for the right blade 30.

Fig. 3 shows a first example of the inclined face 5. The front side wall 22f includes an extension 22a that serves to define the cut grass discharge opening 10. The extension 22a is bent inward as an inclined section 5A having an inner face that serves as an inclined face 5 for the present invention. The inclined section 5A has an end welded to an end of the top plate 21. The inclined section 5A may be in another form such that the top plate 21 includes an extension that serves to define the cut grass discharge opening 10 and that the extension is bent as an inclined section 5A and has an end welded to an end of the front side wall 22f or such that both the front side wall 22f and the top plate 21 are bent and integrated with each other to provide an inclined section 5A.

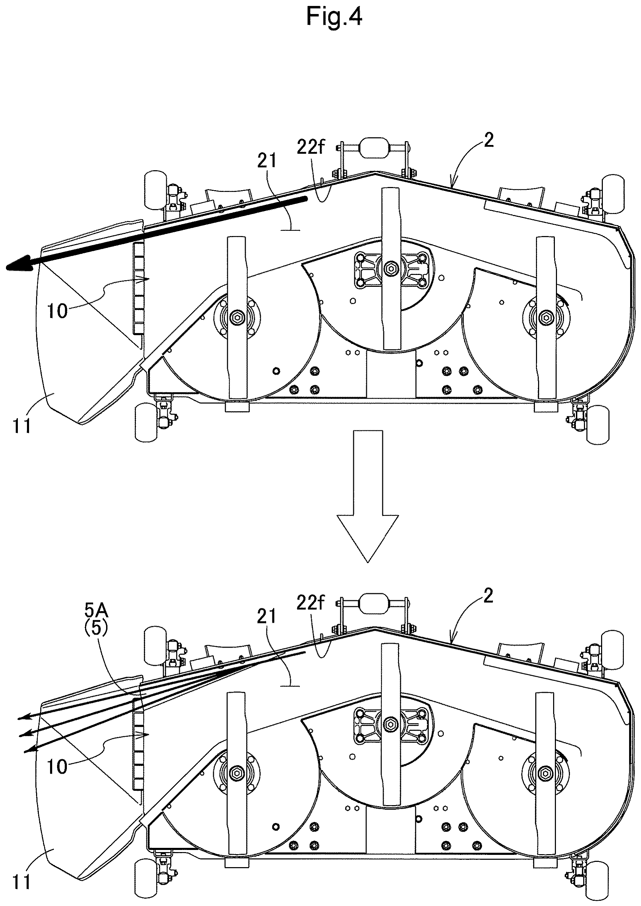

Fig. 4 schematically illustrates how the inclined face 5 is effective. A mower deck 2 above in Fig. 4 does not have an inclined face 5 so that its top plate 21 is connected orthogonally to its front side wall 22f. As indicated with the arrow with a thick solid line, the mower deck 2 discharges from the cut grass discharge opening 10 cut grass in the form of a thin cut grass bundle (cut grass beam) that sticks to the inner face of the front side wall 22f. The inventive mower deck 2 below in Fig. 4, in contrast, has an inclined face 5. As indicated with three arrows with thin solid lines, the mower deck 2 allows cut grass to collide with the inclined face 5 and diffuse before being discharged from the cut grass discharge opening 10.

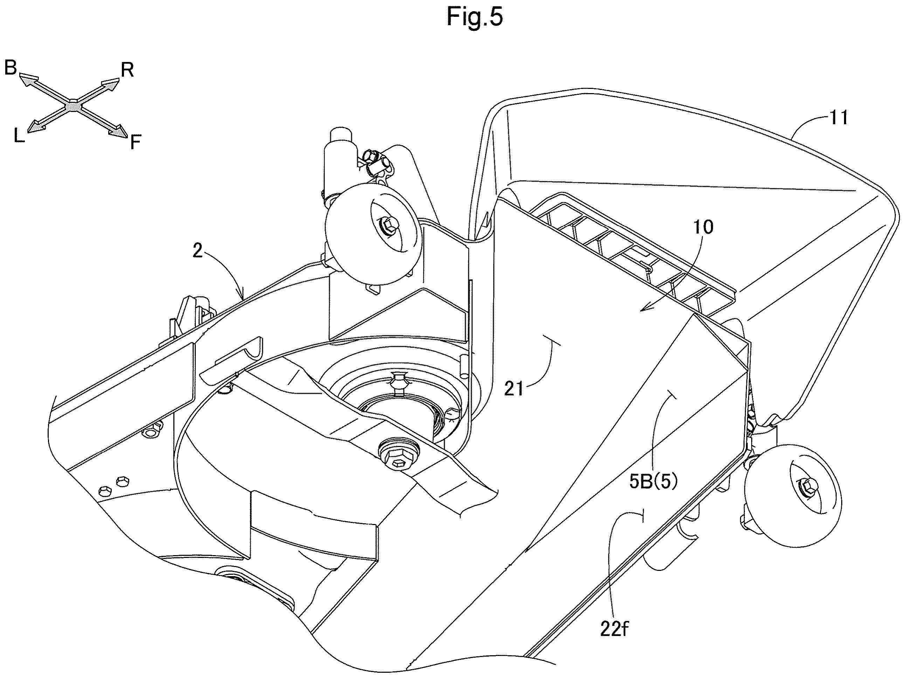

Fig. 5 is a partial perspective view of the mower unit 1 with a second example of the inclined face 5. The mower deck 2 includes in the area of the cut grass discharge opening 10 a plate 5B that is welded to the top plate 21 and the front side wall 22f, that covers the line of the connection between the top plate 21 and the front side wall 22f, and that has a face that serves as an inclined face 5.

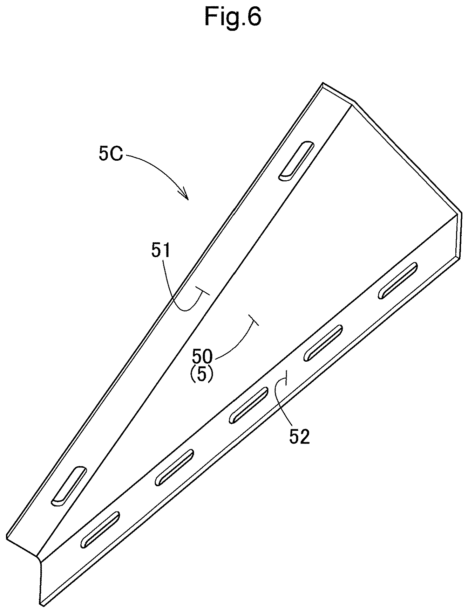

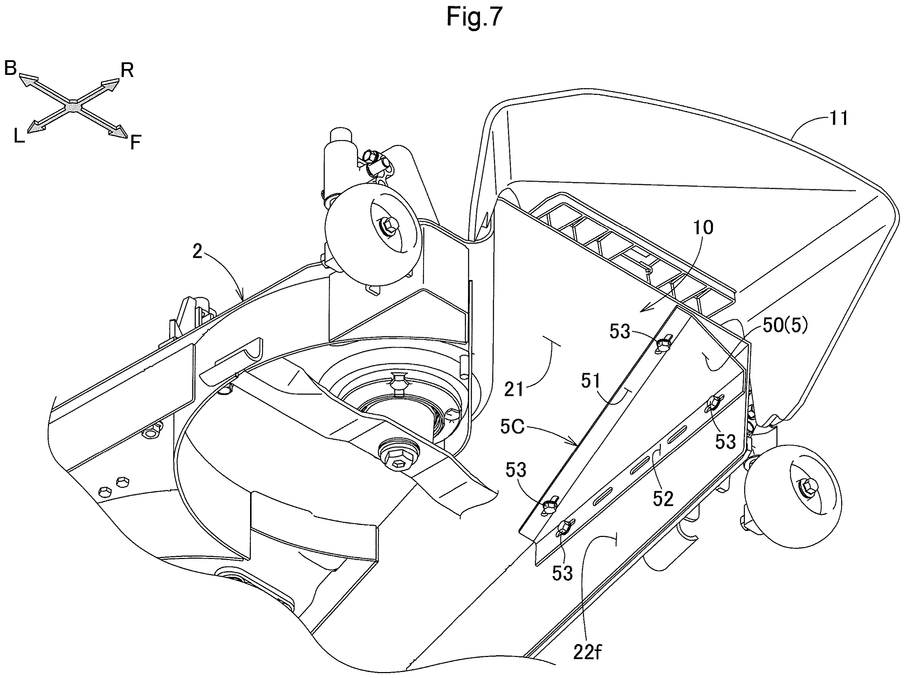

Fig. 6 is a perspective view of an inclined member with a third example of the inclined face 5. Fig. 7 is a partial perspective view of the mower unit 1 with a third example of the inclined face 5. Fig. 6 illustrates an inclined member 5C detachably attachable to the top plate 21 and the front side wall 22f. The inclined member 5C includes a first flange 51 configured to be coupled to the top plate 21, a second flange 52 configured to be coupled to the front side wall 22f, and a central section 50 connecting the first flange 51 to the second flange 52 and having a face that serves as an inclined face 5.

The first and second flanges 51 and 52 each have two or more elongate holes 53. As illustrated in Fig. 7, the inclined member 5C is fixable to the mower deck 2 with use of screws, bolts, or the like through the elongate holes 53 in such a manner as to be adjustable laterally.

### Alternative Embodiments

(1) The mower deck 2 for the embodiment described above includes three blades 30. The mower deck 2 may alternatively include more or fewer than three blades 30.
(2) The blade drive mechanism 31 for the embodiment described above includes a belt. The blade drive mechanism 31 may alternatively include gears. The blade drive mechanism 31 receives motive power from an engine or motor as a motive power source.
(3) The mower deck 2 for the embodiment described above uses a front side wall 22f as a guide wall for the cut grass conveying path. The mower deck 2 may alternatively include inward of the front side wall 22f an additional baffle to form a cut grass conveying path together with the front baffle section 4F and the top plate 21 such that the inclined face 5 extends from the additional baffle to the top plate 21.
(4) The mower deck 2 for the embodiment described above has a cut grass discharge opening 10 at the right end. The mower deck 2 may alternatively have a cut grass discharge opening 10 at the left end, in which case the mower deck 2 and the blades 30 are altered in structure to convey cut grass in the opposite direction.

The arrangements disclosed for the above embodiments (including the alternative embodiments; hereinafter the same applies) may each be combined with an arrangement disclosed for another embodiment, as long as such a combination does not cause a contradiction. Further, the embodiments disclosed in the present specification are mere examples. The present invention is not limited to those embodiments, and may be altered as appropriate, as long as such an alteration does not result in a failure to attain an object of the present invention.

### Industrial Applicability

The present invention is applicable to any mower unit including a mower deck with an internal space and configured to discharge cut grass from a cut grass discharge opening at an end of the internal space.

### Reference Signs List

- 1: Mower unit
- 2: Mower deck
- 4: Baffle plate
- 4B: Rear baffle plate section
- 4F: Front baffle plate section
- 5: Inclined face
- 5A: Inclined section
- 5B: Plate
- 5C: Inclined member
- 10: Cut grass discharge opening
- 11: Discharge cover
- 21: Top plate
- 22: Side wall
- 22b: Rear side wall
- 22a: Extension
- 22f: Front side wall
- 30: Blade
- 31: Blade drive mechanism
- 32: Blade shaft
- 50: Central section
- 51: First flange
- 52: Second flange
- 53: Elongate hole
- IS: Internal space

## Claims

1. A mower unit (1), comprising:
a mower deck (2) having an internal space (IS) and including:
a top plate (21); and
a front side wall (22f) and a rear side wall (22b) each extending downward from an edge of the top plate (21);
a plurality of blades (30) arranged laterally in the internal space (IS) and each rotatable about a vertical axis to cut grass and generate a conveyance wind;
a cut grass discharge opening (10) disposed at a lateral end of the internal space (IS) for discharging the cut grass with use of the conveyance wind; and
an inclined face (5) at a corner defined by the cut grass discharge opening (10), the top plate (21), and the front side wall (22f),
the inclined face (5) being connected to the top plate (21) and the front side wall (22f), extending laterally from the cut grass discharge opening (10), and being narrower as farther away from the cut grass discharge opening (10).

2. The mower unit (1) according to claim 1, wherein
the inclined face (5) is triangular.

3. The mower unit (1) according to claim 1 or 2, wherein
the inclined face (5) is of a curved inclined section extending from the top plate (21) or the front side wall (22f).

4. The mower unit (1) according to any one of claims 1 to 3, wherein
the inclined face (5) is of a plate coupled to the top plate (21) and the front side wall (22f).

5. The mower unit (1) according to any one of claims 1 to 4, further comprising:
an inclined member (5C) including:
a first flange (51) coupled to the top plate (21);
a second flange (52) coupled to the front side wall (22f); and
a central portion connecting the first flange (51) to the second flange (52),
wherein the inclined face (5) is of the central portion.

6. The mower unit (1) according to any one of claims 1 to 5, further comprising:
a baffle plate (4) including:
a rear baffle plate section (4B) shaped along a rear area of rotation of each of the plurality of blades (30); and
a front baffle plate section (4F) disposed between the vertical axis of each of the plurality of blades (30) and the front side wall (22f), and
wherein the front baffle plate section (4F) and the front side wall (22f) define therebetween a cut grass conveying path connected to the cut grass discharge opening (10).
